(19) **Europäisches Patentamt**

**European Patent Office**

**Office européen des brevets**

(11) **EP 0 941 185 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(21) Anmeldenummer: **97948784.0**

(22) Anmeldetag: **23.10.1997**

(51) Int Cl.7: **B60T 8/00**

(86) Internationale Anmeldenummer:
**PCT/EP97/05849**

(87) Internationale Veröffentlichungsnummer:
**WO 98/023472 (04.06.1998 Gazette 1998/22)**

(54) **VERFAHREN UND VORRICHTUNG ZUR VERBESSERUNG DES REGELVERHALTENS EINER BLOCKIERGESCHÜTZTEN BREMSANLAGE**

PROCESS AND DEVICE TO IMPROVE THE REGULATING ACTION OF AN ANTI-LOCK BRAKING SYSTEM

PROCEDE ET DISPOSITIF POUR AMELIORER LE COMPORTEMENT EN REGULATION D'UN SYSTEME DE FREINAGE ANTIBLOCAGE

(84) Benannte Vertragsstaaten:
**DE FR GB**

(30) Priorität: **26.11.1996 DE 19648909**

(43) Veröffentlichungstag der Anmeldung:
**15.09.1999 Patentblatt 1999/37**

(73) Patentinhaber: **Continental Teves AG & Co. oHG 60488 Frankfurt (DE)**

(72) Erfinder:
• **FENNEL, Helmut**
 **D-65812 Bad Soden (DE)**
• **SCHMIDT, Holger**
 **D-35435 Wettenberg (DE)**
• **BATISTIC, Ivica**
 **D-60385 Frankfurt am Main (DE)**

(74) Vertreter: **Blum, Klaus-Dieter Continental Teves AG & Co. oHG, Guerickestrasse 7 60488 Frankfurt (DE)**

(56) Entgegenhaltungen:
| | |
|---|---|
| EP-A- 0 293 561 | EP-A- 0 363 959 |
| DE-A- 3 939 069 | DE-A- 4 141 877 |
| DE-C- 4 123 235 | DE-C- 4 418 771 |
| FR-A- 2 662 982 | GB-A- 2 157 381 |

**Beschreibung**

Die Erfindung bezieht sich auf ein Verfahren und eine Vorrichtung zur Verbesserung des Regelverfahrens einer blockiergeschützten, zum aktiven Einbremsen fähigen Bremsanlage, insbesondere zum Erhalt der Fahrstabilität und zur Verbesserung der Lenkbarkeit in der Kurve, bei dem aus dem Drehverhalten der Fahrzeugräder eine Fahrzeug-Referenzgeschwindigkeit abgeleitet und Kriterien zum Erkennen einer Kurvenfahrtsituation sowie der Kurvenrichtung gewonnen werden.

Es ist bereits bekannt, die Funktionen eines ABS zu erweitern, indem das System zum Verbessern der Fahrstabilität oder Bremsstabilität in der Kurve eingesetzt wird. Ein solcher Regelungseingriff findet während einer Teilbremsung statt, also während eines Bremsvorgangs, bei dem die ABS-Ansprechschwellen nicht erreicht werden. Durch eine gezielte Verzögerung des durch die Bremsbetätigung hervorgerufenen Bremsdruckaufbaus an den kurveninneren Rädern im Vergleich zum Bremsdruck an den kurvenäußeren Rädern wird ein stabilisierendes Moment um die Hochachse des Fahrzeugs erzeugt ("Bremsanlage und Schlupf-Regelsystem der neuen 7er-Reihe von BMW", ATZ 97 (1995), Seiten 8-15 und "Bremsanlage und Schlupf-Regelungssysteme der neuen Baureihe 5 von BMW", ATZ 98 (1996), Seiten 188-194). Die Information über den aktuellen Lenkwinkel wird, wenn kein Lenkwinkelsensor verwendet wird, aus der Querbeschleunigung des Fahrzeugs abgeleitet, die wiederum aus den Radsensorsignalen berechnet wird.

Aus der DE 39 39 069 A1 ist bereits ein Kraftfahrzeug bekannt, bei dem beim Auftreten eines vorgegebenen Bremsund/oder Seitenschlupfes an den Hinterrädern ohne Bremsbetätigung ein Signal erzeugt wird. Es ist eine Kurvenerkennungseinrichtung vorgesehen, die das Befahren einer Kurve und die Art der Kurve erkennt. Bei Kurvenerkennung, nicht betätigter Bremse und bei einem Brems- und/oder Seitenschlupf an den Rädern wird Bremsdruck an der Hinterachse, vorzugsweise nur an der Bremse des kurvenäußeren Hinterrades, eingesteuert. Auf diese Weise soll eine Erhöhung der Seitenführungskraft am kurvenäußeren Hinterrad erreicht und damit dem Eindrehen des Fahrzeugs entgegengewirkt werden.

In der DE 34 13 738 C2 ist ein Blockierschutzregelungssystem (ABS) mit einer Kurvenfahrterkennungsschaltung beschrieben, die auf der Radschlupfmessung beruht. Zur Kurvenfahrterkennung werden die Schlupfwerte an den Rädern einer Fahrzeugseite addiert, mit der Schlupfsumme der Räder der anderen Fahrzeugseite verglichen und ein Kurvenfahrterkennungssignal erzeugt, sobald die Differenz der Schlupfsummen einen vorgegebenen Grenzwert überschreitet. Bei Kurvenfahrterkennung werden dann Auswahlkriterien, wie "select-low" oder "selecthigh", nach denen der Druckverlauf in den einzelnen Bremsdruckregelkanälen dieser Bremsanlage geregelt wird, und Grenzwerte für das Wirksamwerden dieser Auswahlkriterien variiert. Auf diese Weise wird die Regelung den unterschiedlichen Bedingungen während einer Geradeausfahrt und während einer Kurvenfahrt angepaßt.

Außerhalb einer Teilbremsung ist eine Stabilisierung eines Fahrzeugs durch Bremseingriff natürlich nur dann möglich, wenn in der Bremsanlage bzw. in den Radbremsen auch ohne Betätigung des Bremspedals bzw. Bremsdruckgebers Bremsdruck erzeugt werden kann. Bekannte Bremsanlagen mit Antriebsschlupfregelung (ASR) und/oder Fahrstabilitätsregelung (FSR, ASMS etc.) sind zu einem aktiven Einbremsen fähig.

Die bekannten Fahrstabilitätsregelungssystem sind mit Giergeschwindigkeitssensoren, Lenkwinkelsensoren usw., die zusätzlich zu den Radgeschwindigkeitssensoren benötigt werden, und mit aufwendigen Rechner- und Überwachungssystemen ausgerüstet. Beim Erkennen von Giermomenten, die die Fahrstabilität gefährden, werden nach Auswertung aller Meßwerte die Radbremsen selektiv angesteuert, um ein ausgleichendes, stabilisierendes Giermoment um die Hochachse des Fahrzeugs zu erzeugen.

Der vorliegenden Erfindung liegt nun die Aufgabe zugrunde, auf einfache Weise und mit höchstens geringem Mehraufwand das Regelverhalten einer blokkiergeschützten Bremsanlage zu verbessern und die Regelfunktionen zu erweitern, um auch bei nicht betätigter Bremse die Lenkbarkeit und die Fahrstabilität des Fahrzeugs während einer Kurvenfahrt zu erhalten.

Es hat sich herausgestellt, daß diese Aufgabe mit dem im Anspruch 1 beschriebenen Verfahren auf sehr einfache Weise gelöst werden kann. Die Besonderheit des erfindungsgemäßen Verfahrens besteht also darin, daß bei gleichzeitigem Erkennen bzw. Erfüllen folgender Bedingungen

- Kurvenfahrt-Situation
- das Fahrzeug verzögert, obwohl
- die Bremse nicht betätigt wird,
- eine kritische, auf ein Eindrehen des Fahrzeugs bzw. auf das Erreichen eines Rurvengrenzbereichs hinweisende Schlugfbedingung ist erfüllt.

Beim gleichzeitigen Eintreten dieser Bedingungen wird erfindungsgemäß eine Sonderregelung gestartet, die eine Bremsdruckeinsteuerung zumindest in die Radbremse des kurvenäußeren Vorderrades hervorruft.

In manchen Fällen hat es sich als vorteilhaft erwiesen, die Bremsdruckeinsteuerung ausschließlich auf das kurvenäußere Vorderrad zu begrenzen. In anderen Fällen ist eine asymmetrische Bremsdruckeinsteuerung in beide Vorderradbremsen vorzuziehen, wobei zur Stabilisierung des zum Eindrehen neigenden Fahrzeugs grundsätzlich an dem kurvenäußeren Vorderrad der höhere Bremsdruck benötigt wird. Das Abbremsen beider Vorderräder ist vorteilhaft, weil in der Regel die drohende Instabilität durch eine nicht angepaßte, nämlich zu hohe Geschwindigkeit in der Kurve hervorgerufen wird.

Als Kriterium für das Erfüllen der kritischen Schlupfbedingung wird nach einem weiteren vorteilhaften Ausführungsbeispiel der Erfindung das Auftreten eines höheren Bremsschlupfes am kurvenäußeren Hinterrad im Vergleich zum kurvenäußeren Vorderrad bewertet. Dieses Schlupfverhältnis weist auf das "Eindrehen" des Fahrzeugs oder das Erreichen des Kurvengrenzbereichs infolge einer Kurvenfahrt mit zu hoher Geschwindigkeit hin.

Anstelle der Schlupfbetrachtung kann auch das momentan schnellste Fahrzeugrad ermittelt und bewertet werden. Rotiert das kurvenäußere Vorderrad mit der höchsten Geschwindigkeit, wobei dieser Vergleich auf Basis gefilterter Radsignale durchgeführt wird, ist der kritische Zustand, nämlich ein höherer Bremsschlupf am kurvenäußeren Hinterrad im Vergleich zum kurvenäußeren Vorderrad, eingetreten.

Die stabilisierende Bremsdruckeinsteuerung in das kurvenäußere Vorderrad oder asymmetrisch in beide Vorderräder erfolgt zweckmäßigerweise durch einen einmaligen Bremsdruckeinsteuerpuls von z.B. 200 - 300 ms oder durch eine entsprechende Pulsfolge. Andererseits kann die Sonderregelung und damit die Druckeinsteuerung solange fortgesetzt werden, bis die kritische Schlupfbedingung nicht mehr gegeben ist oder, anders ausgedrückt, bis die kurvenäußeren Räder annähernd gleichen Schlupf signalisieren.

Einen Algorithmus zur Erkennung der Kurvenfahrt und einige weitere vorteilhafte Ausführungsbeispiele der Erfindung, einschließlich einer Vorrichtung zur Durchführung des erfindungsgemäßen Verfahrens, sind in den Unteransprüchen beschrieben.

Weitere Einzelheiten der Erfindung gehen aus der folgenden Beschreibung anhand der beigefügten Abbildungen hervor.

Es zeigen:

Fig. 1    in schematischer Darstellung die wichtigsten Komponenten einer Bremsanlage zur Durchführung des erfindungsgemäßen Verfahrens und

Fig. 2    im Diagramm die Abhängigkeit des Schlupfdifferenz-Schwellwertes von der Fahrzeuggeschwindigkeit gemäß einem Ausführungsbeispiel der Erfindung.

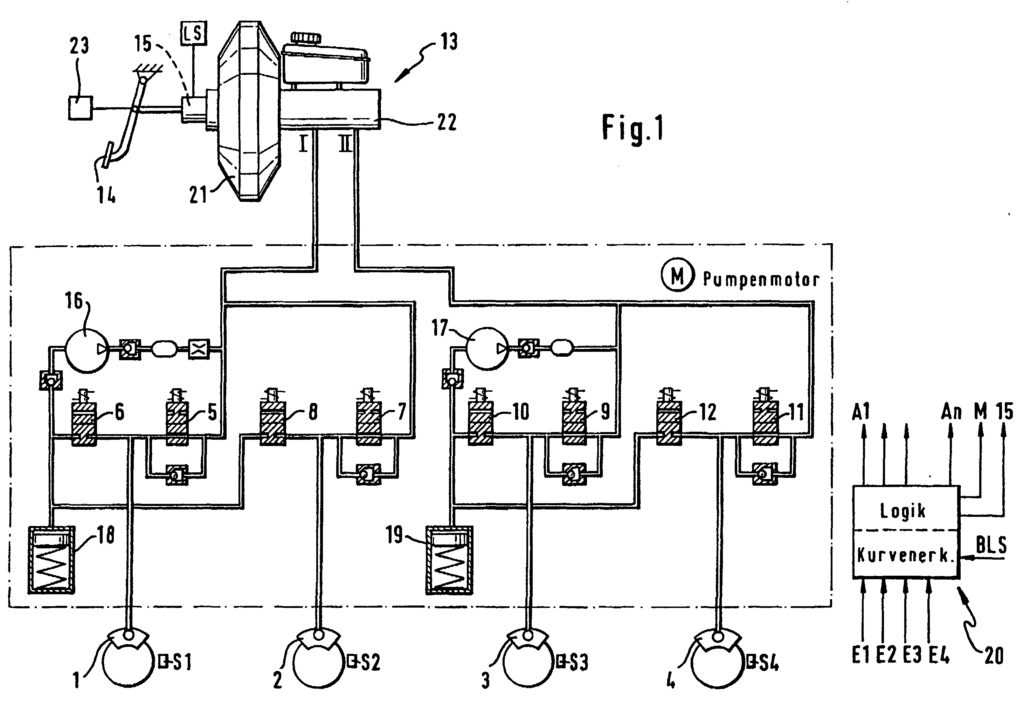

Nach einem vorteilhaften Ausführungsbeispiel, auf das sich Fig. 1 bezieht, besteht eine Vorrichtung zur Durchführung des erfindungsgemäßen Verfahrens im wesentlichen aus einem herkömmlichen Antiblockiersystem mit einem unabhängig von einer Bremspedalbetätigung aussteuerbaren Bremskraftverstärker und aus einem elektronischen Regler, der die Kurvenerkennung und das Überwachen der vorgenannten Kriterien sowie das Umschalten auf die Sonderregelung ausführt. In Fig. 1 ist in symbolischer Darstellungsweise eine zweikreisige hydraulische Bremsanlage mit individueller Regelung des Bremsdruckes in den einzelnen Radbremsen wiedergegeben.

Jeder Radbremse 1,2,3,4 ist ein Einlaß-/Auslaßventilpaar 5,6; 7,8; 9,10; 11,12 zugeordnet. Es handelt sich in allen Fällen um elektrisch betätigbare 2/2-Wegeventile. Die Einlaßventile 5,7,9,11 sind in ihrer Ruhestellung auf Durchlaß geschaltet, die Auslaßventile 6,8,10,12 in ihrer Ruhestellung gesperrt.

Als zweikreisiger Bremsdruckgeber 13 ist ein aktiver, unabhängig von der Betätigung eines Bremspedals 14 aktivierbarer oder aussteuerbarer Bremskraftverstärker, der sich aus einem Unterdruckverstärker 21 und einem Tandem-Hauptzylinder 22 zusammensetzt, vorgesehen. Im dargestellten Beispiel handelt es sich um einen sogenannten On/Off-Booster 21, der durch Anlegen eines elektrischen Signals an ein Steuerventil 15 ausgesteuert werden kann. Dieser Booster hat nur zwei Schaltstellungen und läßt sich daher mit vergleichsweise geringem Mehraufwand im Vergleich zu einem herkömmlichen, passiven Bremskraftverstärker herstellen. In der On-Position des On/Off-Boosters muß lediglich gewährleistet sein, daß das von Hydraulikpumpen 16,17 im Bedarfsfall geförderte Druckmittel über den Hauptzylinder des Bremsdruckgebers nicht abfließen kann.

Die beiden Hydraulikpumpen 16,17 werden in bekannter Weise über einen symbolisch dargestellten Elektro-Antriebsmotor M gemeinsam angetrieben. Jeder Bremskreis I, II ist an der Saugseite der Pumpe 16,17 noch mit einem Niederdruckspeicher 18,19 ausgerüstet, der den schnellen Druckabbau beim Öffnen der Auslaßventile 6,8,10,12 vor dem Anlaufen der Hydraulikpumpen 16,17 unterstützt.

Zu der geregelten Bremsanlage gehören schließlich noch Radsensoren S1 - S4, deren Ausgangssignale das Drehverhalten der einzelnen Fahrzeugräder VR,VL,HR,HL darstellen, und ein elektronischer Regler 20, der in Fig. 1 als Blackbox dargestellt ist. Dem Regler 20 werden u.a. die Sensorsignale über die angedeuteten Eingänge E1 - E4 zugeführt. Die Ausgangssignale A1 - An des Reglers 20 führen zu den einzelnen elektrisch betätigbaren Hydraulikventilen 5 - 12, zum Antriebsmotor M der Hydraulikpumpen 16,17 und zu dem Steuerventil 15 am Eingang des aktiven Boosters 21.

Ein Bremslichtschalter 23 (BLS) ist ebenfalls in Fig. 1 in Verbindung mit dem Bremskraftverstärker 21 wiedergegeben. Es handelt sich z.B. um einen Pedalweg-Schalter, dessen Schaltstellung erkennen läßt, ob eine der notwendigen Voraussetzungen zum Einsetzen der erfindungsgemäßen Sonderregelung, nämlich die Bremspedalbetätigung, erfüllt ist. Das Ausgangssignal des Bremslichtschalters 23 wird folglich ebenfalls dem elektronischen Regler 20 zugeführt.

In dem Regler 20, der im vorliegenden Fall komplexe Schaltkreise und Mikrocomputer zur Verarbeitung der Eingangsdaten enthält, wird durch Auswertung der Schlupfwerte, die auf Basis der Radsensorsignale und einer aus diesen Signalen abgeleiteten Fahrzeug-Referenzgeschwindigkeit $v_{REF}$ gewonnen werden, das Vorliegen einer Kurvenfahrt-Situation erkannt. Wird außerdem - durch Auswertung der Radsensorsignale - eine Fahrzeugverzögerung festgestellt, obwohl die Bremse nicht betätigt ist, ist nur noch die Erfüllung der kritischen "Schlupfbedingung" erforderlich, um die Sonderregelung einzuleiten. Wie bereits erläutert, läßt ein höherer Schlupfwert am kurvenäußeren Hinterrad im Vergleich zum Schlupf am kurvenäußeren Vorderrad auf ein "Eindrehen" des Fahrzeugs bzw. auf ein Erreichen des Kurvengrenzbereichs und damit auf eine drohende Instabilität des Fahrzeugs schließen. Durch einen kurzen Druckaufbaupuls, der zur Einsteuerung von Bremsdruck in die Radbremse des kurvenäußeren Vorderrades führt, wird beim Eintritt in diese Sonderregelung dem Eindrehen des Fahrzeugs bzw. dem Übersteuern in dieser Kurvensituation entgegengewirkt und die Fahrstabilität wieder hergestellt.

Eine asymmetrische Bremsdruckeinsteuerung in die Radbremsen der beiden Vorderräder, wobei der höhere Bremsdruck am kurvenäußeren Vorderrad aufgebaut wird, wirkt sich ebenfalls günstig auf die Fahrstabilität aus, weil grundsätzlich ein Abbremsen des in dieser Kurvenfahrtsituation zu schnellen Fahrzeugs für die Fahrstabilität von Vorteil ist.

Im allgemeinen dürfte ein einmaliger Druckaufbaupuls von z.B. 200 - 300 ms genügen. Die optimale oder günstigste Druckeinsteuerung ist natürlich in weiten Grenzen abhängig von der jeweiligen Fahrzeugkonstruktion und der Fahrtsituation.

Es ist auch möglich, die Druckeinsteuerung solange fortzusetzen, bis die Schlupfverhältnisse an den kurvenäußeren Fahrzeugrädern die Wiederherstellung der Stabilität erkennen lassen.

Eine Kurvenfahrtsituation wird erfaßt durch einen Geschwindigkeitsdifferenzwert $\Delta v$, dessen Überschreiten als Kurvenerkennung und damit als Erfüllung der entsprechenden Bedingungen zum Eintritt der erfindungsgemäßen Sonderregelung gewertet wird.

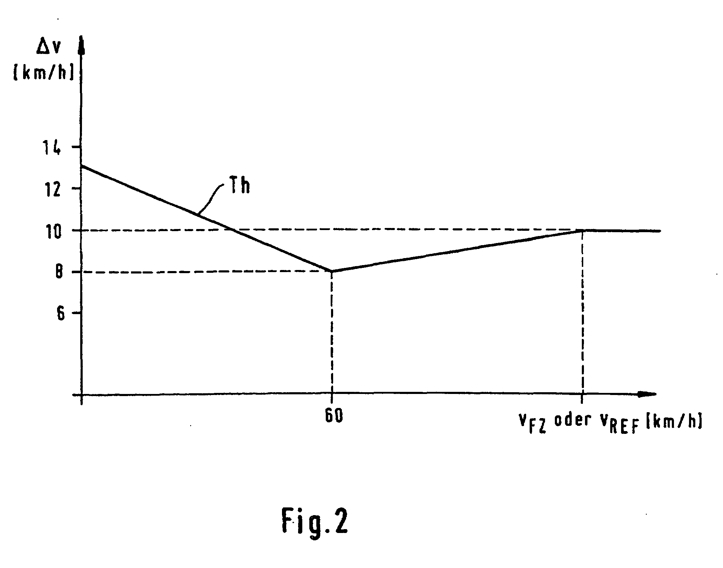

Der Schwellwert Th für die Beurteilung dieses Geschwindigkeits- differenzwertes $\Delta v$ liegt beispielsweise in einer Größenordnung zwischen 8 und 13 km/h. Figur 2 veranschaulicht einen variablen, von der momentanen Fahrzeuggeschwindigkeit $v_{FZ}$ oder Fahrzeug-Referenzgeschwindigkeit $v_{REF}$ abhängigen Schwellwert Th. In einem unteren Geschwindigkeitsbereich, der nach Fig. 2 zwischen 0 und 60 km/h liegt, wird der Schwellwert Th linear von anfänglich 13 km/h auf 8 km/h abgesenkt. Es schließt sich im mittleren Geschwindigkeitsbereich zwischen 60 und 120 km/h ein linear ansteigender Schwellwert Th an, der schließlich bei hohen Geschwindigkeiten zweckmäßigerweise einen (annähernd) konstanten Wert von beispielsweise 9 km/h annimmt. Natürlich ist der dargestellte Kurvenverlauf auf ein bestimmtes Fahrzeug abgestimmt. Bei abweichender Fahrzeugkonstruktion ist ein über den gesamten Geschwindigkeitsbereich gleichbleibender Schwellwert oder ein völlig anderer Verlauf denkbar.

Erfindungsgemäß wird also durch eine relativ einfache, mit geringem Aufwand zu realisierende Erweiterung eines Antiblockiersystems, nämlich durch die Verwendung eines aktiven Bremsdruckgebers und Überwachung der beschriebenen Kriterien, eine Erhöhung der Fahrstabilität und Lenkbarkeit während einer Kurvenfahrt erreicht. Andere Ausführungsformen und Maßnahmen zur aktiven Einbremsung, beispielsweise auf Basis des sogenannten Bremsassistenten, oder durch Verwendung von Vorladepumpen etc., können ebenfalls zur Verbesserung des Regelverhaltens in der beschriebenen Situation eingesetzt werden.

Das Erkennen und Auswerten der beschriebenen Kriterien - Erkennen einer Kurvenfahrtsituation und einer Eindrehtendenz durch Schlupfbetrachtung, Auswertung des Bremslichtschaltersignals usw. - beruhen ebenfalls auf einfachen und daher mit geringem Aufwand auszuführenden Berechnungen. Die erfindungsgemäße Regelbesserung erfordert also insgesamt nur einen sehr geringen Mehraufwand.

**Patentansprüche**

1.   Verfahren zur Verbesserung des Regelverhaltens einer blokkiergeschützten, zum aktiven Einbremsen fähigen Bremsanlage, insbesondere zur Verbesserung der Lenkbarkeit des Fahrzeug und der Fahrstabilität während einer Kurvenfahrt, bei dem aus dem Drehverhalten der Fahrzeugräder eine Fahrzeug-Referenzgeschwindigkeit abgeleitet und Kriterien zur Erkennung einer Kurvenfahrtsituation sowie der Kurvenrichtung gewonnen werden, **dadurch gekennzeichnet, daß** bei Kurvenfahrterkennung und Erkennen von gleichzeitiger Verzögerung des Fahrzeugs bei nicht betätigter Bremse, wenn gleichzeitig eine kritische, auf ein Eindrehen des Fahrzeugs bzw. das Erreichen eines Kurvengrenzbereichs hinweisende Schlupfbedingung erfüllt ist, eine Sonderregelung einsetzt, bei der zumindest in die Radbremse des kurvenäußeren Vorderrades Bremsdruck eingesteuert wird.

2.   Verfahren nach Anspruch 1, **dadurch gekennzeichnet, daß** das Auftreten eines höheren Bremsschlupfes am kurvenäußeren Hinterrad im Vergleich zum kurvenäußeren Vorderrad als kritische Schlupfbedingung bewertet wird.

3.   Verfahren nach Anspruch 2, **dadurch gekennzeichnet, daß** zum Erkennen einer Situation mit höherem Bremsschlupf am kurvenäußeren Hinterrad im Vergleich zum kurvenäußeren Vorderrad das Rad mit der momentan höchsten Drehgeschwindigkeit auf Basis gefilterter Radgeschwindigkeitssignale ermittelt wird.

4. Verfahren nach einem oder mehreren der Ansprüche 1 bis 3 **dadurch gekennzeichnet, daß** beim Eintreten der kritischen Schlupfbedingung Bremsdruck ausschließlich in die Radbremse des kurvenäußeren Vorderrades eingesteuert wird.

5. Verfahren nach einem oder mehreren der Ansprüche 1 bis 3, **dadurch gekennzeichnet, daß** beim Eintreten der kritischen Schlupfbedingung Bremsdruck in die Radbremsen beider Vorderräder eingesteuert wird, wobei die Bremsdruckeinsteuerung am kurvenäußeren Vorderrad mit höherem Aufbaugradienten und/oder über eine längere Zeitspanne erfolgt.

6. Verfahren nach einem oder mehreren der Ansprüche 1 bis 5, **dadurch gekennzeichnet, daß** zur Kurvenfahrterkennung ein Geschwindigkeitsdifferenzwert (Δv), der die Differenz der Radgeschwindigkeitssummen beider Fahrzeugseiten darstellt, nach der Beziehung

$$\Delta v = |(V1+V4) - (V2 + V3)| > T$$

mit

V1 = Geschwindigkeit des linken Vorderrades
V2 = Geschwindigkeit des rechten Vorderrades
V3 = Geschwindigkeit des rechten Hinterrades
V4 = Geschwindigkeit des linken Hinterrades
Th = Geschwindigkeits-Schwellwert

gebildet wird, wobei eine Kurvenfahrtsituation erkannt wird, wenn der Geschwindigkeitsdifferenzwert Δv einen vorgegebenen Schwellwert (Th), der in der Größenordnung zwischen 5 und 20 km/h liegt, beschreitet.

7. Verfahren nach Anspruch 6, **dadurch gekennzeichnet, daß** der Geschwindigkeits-Schwellwert (Th) in Abhängigkeit von der Fahrzeuggeschwindigkeit ($v_{FZ}$) oder Fahrzeug-Referenzgeschwindigkeit ($V_{REF}$) variiert wird.

8. Verfahren nach Anspruch 7, **dadurch gekennzeichnet, daß** der Schwellwert (Th) in einem unteren Fahrzeug-Geschwindigkeitsbereich (< 60 km/h) mit steigender Fahrzeuggeschwindigkeit von einem anfänglichen Maximalwert auf einen Minimalwert reduziert wird, in Geschwindigkeitsbereich mit steigender Fahrzeuggeschwindigkeit zunimmt und in einem höheren Geschwindigkeitsbereich annähernd konstant gehalten wird.

9. Verfahren nach einem oder mehreren der Ansprüche 1 bis 8, **dadurch gekennzeichnet, daß** die Bremsdruckeinsteuerung als Folge der Sonderregelung durch einen Druckaufbaupuls mit einer Zeitdauer von etwa 100 bis 500 ms, insbesondere von 100 bis 300 ms, oder durch eine entsprechende Druckaufbaupulsfolge herbeigeführt wird.

10. Verfahren nach einem oder mehreren der Ansprüche 1 bis 8, **dadurch gekennzeichnet, daß** die Bremsdruckeinsteuerung beendet wird, sobald die kritische Schlupfbedingung nicht mehr erfüllt ist.

11. Vorrichtung zur Durchführung des Verfahrens nach einem oder mehreren der Ansprüche 1 bis 8, **dadurch gekennzeichnet, daß** diese aus einem Antiblockiersystem (ABS) mit einem unabhängig von der Pedalbetätigung aussteuerbaren Bremskraftverstärker (21) und aus einem elektronischen Regler (20) besteht, der bei Kurvenfahrterkennung und Erkennen von gleichzeitiger Verzögerung des Fahrzeugs bei nicht betätigter Bremse, wenn eine vorgegebene Schlupfbedingung erfüllt ist, eine Sonderregelung auslöst, die eine das Fahrzeug stabilisierende Bremsdruckeinsteuerung in die Radbremse (1 oder 3) des kurvenäußeren Vorderrades (VR oderVL) oder eine asymmetrische Bremsdruckeinsteuerung in die Radbremsen (1,3)beider Vorderräder(VR,VL) herbeiführt.

**Claims**

1. Method of improving the control behavior of an antilock brake system adapted for active braking intervention, more particularly for improving the steerability of the vehicle and driving stability during cornering, wherein a vehicle reference speed is derived from the rotational behavior of the vehicle wheels and criteria for identifying a cornering situation and the direction of a bend are obtained, **characterized in that** during cornering identification and identification of a simultaneous deceleration of the vehicle when the brake is not applied, if additionally a critical slip condition indicating veering of the vehicle or the attaining of a bend limit range is satisfied, a special control will commence where braking pressure is introduced at least into the wheel brake of the bend-outward front wheel.

2. Method as claimed in claim 1, **characterized in that** the occurrence of a higher brake slip on the bend-outward rear wheel in comparison to the bend-outward front wheel is assessed as a critical slip condition.

3. Method as claimed in claim 2, **characterized in that** for identifying a situation with higher brake slip on the bend-outward rear wheel in comparison with the bend-outward front wheel, the wheel with the instantaneously highest rotational speed is determined on the basis of filtered wheel speed signals.

4. Method as claimed in any one or more of claims 1 to 3,
**characterized in that** braking pressure is introduced exclusively into the wheel brake of the bend-outward front wheel when the critical slip condition occurs.

5. Method as claimed in any one or more of claims 1 to 3,
**characterized in that** braking pressure is introduced into the wheel brakes of both front wheels when the critical slip condition occurs, and the braking pressure introduction at the bend-outward front wheel is performed with a higher increase gradient and/or for a longer period of time.

6. Method as claimed in any one or more of claims 1 to 5,
**characterized in that** for cornering identification, a speed difference value ($\Delta v$), which represents the difference between the wheel speed sums of both vehicle sides, is produced according to the relation

$$\Delta v = |(V1+V4) - (V2 + V3)| > T$$

wherein
V1 is the speed of the left front wheel
V2 is the speed of the right front wheel
V3 is the speed of the right rear wheel
V4 is the speed of the left rear wheel
Th is the speed limit value,
and a cornering situation is identified when the speed difference value $\Delta v$ exceeds a predetermined limit value (Th) which is in the order between 5 and 20 km/h.

7. Method as claimed in claim 6,
**characterized in that** the speed limit value (Th) is varied as a function of the vehicle speed ($v_{FZ}$) or the vehicle reference speed ($V_{REF}$).

8. Method as claimed in claim 7,
**characterized in that** in a bottom vehicle speed range (< 60 km/h) with rising vehicle speed, the limit value (Th) is reduced from an initial maximum value to a minimum value, increases in a medium speed range with rising vehicle speed, and is maintained approximately constant in a higher speed range.

9. Method as claimed in any one or more of claims 1 to 8,
**characterized in that** the braking pressure introduction, as a result of the special control, is effected by a pressure increase pulse of a duration of roughly 100 to 500 msec, more particularly 100 to 300 msec, or by a corresponding pressure increase pulse train.

10. Method as claimed in any one or more of claims 1 to 8,
**characterized in that** the braking pressure introduction is terminated as soon as the critical slip condition is no longer satisfied.

11. Device for implementing the method as claimed in any one or more of claims 1 to 8,
**characterized in that** the device includes an anti-lock system (ABS) with a brake force booster (21) whose maximally attainable boosting force can be achieved irrespective of pedal depression, and an electronic controller (20) which, upon cornering identification and identification of a simultaneous deceleration of the vehicle, with the brake not applied, if a predetermined slip condition is satisfied, triggers a special control which causes a vehicle-stabilizing braking pressure introduction into the wheel brake (1 or 3) of the bend-outward front wheel (VR or VL) or an asymmetrical braking pressure introduction into the wheel brakes (1, 3) of both front wheels (VR, VL).

**Revendications**

1. Procédé pour améliorer le comportement en régulation d'un système de freinage protégé contre le blocage et capable d'un freinage actif, en particulier pour améliorer la manoeuvrabilité du véhicule et la stabilité de conduite dans un virage, avec lequel, à partir du comportement en rotation des roues du véhicule, on déduit une vitesse de référence du véhicule et on obtient des critères pour reconnaître une situation de conduite en virage et le sens de virage, **caractérisé en ce que**, dans le cas d'une détection de conduite en virage et d'une décélération simultanée du véhicule avec un frein non actionné, si l'on remplit en même temps une condition de glissement critique indiquant une rotation du véhicule ou qu'une plage limite de virage est atteinte, il intervient une régulation spéciale, par laquelle une pression de freinage est injectée au moins dans le frein de la roue avant extérieure au virage.

2. Procédé selon la revendication 1, **caractérisé en ce que** l'apparition d'un glissement de freinage plus élevé sur la roue arrière extérieure au virage par rapport à la roue arrière extérieure au virage est considérée comme une condition de glissement critique.

**3.** Procédé selon la revendication 2, **caractérisé en ce que**, pour détecter une situation avec un glissement de frein supérieur sur la roue arrière extérieure au virage par rapport à la roue avant extérieure au virage, la roue avec la vitesse de rotation maximale à un instant donné est déterminée sur la base de signaux filtrés de vitesse de roue.

**4.** Procédé selon l'une quelconque ou plusieurs des revendications 1 à 3, **caractérisé en ce que**, lors de l'apparition de la condition de glissement critique, de la pression de freinage est injectée exclusivement dans le frein de la roue avant extérieure au virage.

**5.** Procédé selon l'une quelconque ou plusieurs des revendications 1 à 3, **caractérisé en ce que**, lors de l'apparition de la condition de glissement critique, on injecte de la pression de freinage dans les freins des deux roues avant, l'injection de pression de freinage s'effectuant sur la roue avant extérieure au virage avec un gradient plus élevé d'établissement de pression et/ou pendant un laps de temps plus long.

**6.** Procédé selon l'une quelconque ou plusieurs des revendications 1 à 5, **caractérisé en ce que**, pour reconnaître une conduite en virage, on détermine une différence de vitesse ($\Delta v$), qui représente la différence entre les totaux de vitesse de roue des deux côtés du véhicule, selon la relation

$$\Delta v = |(V1+V4)-(V2 + V3)| > T$$

avec
V1 = vitesse de la roue avant gauche
V2 = vitesse de la roue avant droite
V3 = vitesse de la roue arrière droite
V4 = vitesse de la roue arrière gauche
Th = valeur seuil de vitesse
une situation de conduite en virage étant reconnue lorsque la différence de vitesse $\Delta v$ atteint une valeur seuil (Th) prédéfinie, qui se situe entre 5 et 20 km/h.

**7.** Procédé selon la revendication 6, **caractérisé en ce qu'**on fait varier la valeur seuil de vitesse (Th) en fonction de la vitesse du véhicule ($V_{FZ}$) ou de la vitesse de référence du véhicule ($V_{REF}$).

**8.** Procédé selon la revendication 7, **caractérisé en ce que** la valeur seuil (Th) est réduite d'une valeur maximale initiale à une valeur minimale dans une plage inférieure de vitesses de véhicule (< 60 km/h) avec une vitesse de véhicule croissante, augmente dans une plage de vitesses avec une vitesse de véhicule croissante et est maintenue approximativement constante dans une plage supérieure de vitesses.

**9.** Procédé selon l'une quelconque ou plusieurs des revendications 1 à 8, **caractérisé en ce que** l'injection de pression de frein est effectuée comme conséquence de la régulation spéciale par une impulsion d'établissement de pression avec une durée d'environ 100 à 500 ms, en particulier de 100 à 300 ms, ou par une séquence appropriée d'impulsions d'établissement de pression.

**10.** Procédé selon l'une quelconque ou plusieurs des revendications 1 à 8, **caractérisé en ce que** l'injection de pression de frein est achevée dès que la condition de glissement critique n'est plus remplie.

**11.** Dispositif pour l'application du procédé selon l'une quelconque ou plusieurs des revendications 1 à 8, **caractérisé en ce que** celui-ci comprend un (ABS) équipé d'un dispositif de servo-frein (21) pouvant être déclenché indépendamment de la commande de pédale et un régulateur (20) électronique, qui déclenche une régulation spéciale en cas de reconnaissance de conduite en virage et d'une décélération simultanée du véhicule avec un frein non actionné lorsqu'une condition de glissement prédéfinie est remplie, laquelle régulation entraîne une injection de pression de freinage, qui stabilise le véhicule, dans le frein de roue (1 ou 3) de la roue avant extérieure au virage (avant droite ou avant gauche) ou une injection asymétrique de pressiôn de freinage dans les freins de roue (1,) de deux roues avant (avant droite, avant gauche).

Fig.1

Fig.2